# EUROPÄISCHE PATENTSCHRIFT

(11) **EP 4 478 138 B1**
(45) Veröffentlichungstag und Bekanntmachung des Hinweises auf die Patenterteilung: **30.07.2025**
(21) Anmeldenummer: 23179420.7
(22) Anmeldetag: 15.06.2023
(51) Int. Cl.: B25J 9/16, G05B 19/406, G05B 19/042, G05B 9/02

(54) **SICHERHEITSSYSTEM FÜR EINE MASCHINE UND ENTSPRECHENDES VERFAHREN**
SAFETY SYSTEM FOR A MACHINE AND CORRESPONDING METHOD
SYSTÈME DE SÉCURITÉ POUR UNE MACHINE ET PROCÉDÉ CORRESPONDANT

(43) Veröffentlichungstag der Anmeldung: 18.12.2024
(73) Patentinhaber: SICK AG, 79183 Waldkirch (DE)
(72) Erfinder: Hansen, Christoph, 22393 Hamburg (DE); Plitzkow, Jan, 22926 Ahrensburg (DE); Winter, Jonas, 23896 Nusse (DE); Schubert, Lars, 24119 Kronshagen (DE); Hummel, Klaus, 77974 Meißenheim (DE); Löffler, Timo, 77972 Mahlberg (DE)
(74) Vertreter: Manitz Finsterwald Patent- und Rechtsanwaltspartnerschaft mbB

(56) Entgegenhaltungen:
- EP-A1- 3 644 145
- EP-A1- 3 709 106
- DE-A1- 102022 100 797

## Beschreibung

Diese Erfindung bezieht sich auf ein Sicherheitssystem für eine Maschine und ein Verfahren zum Überwachen von Selbstdiagnosefunktionen einer Steuerung.

In der praxisgerechten Anwendung der Mensch-Maschine-Kooperation sollen Mensch und Maschine kooperativ mit einem minimalen Sicherheitsabstand zusammenarbeiten. Zur Verhinderung von Unfällen und Verletzungen der Mitarbeitenden müssen diese einerseits vor gefährlichen Bewegungen der Maschine geschützt werden. Andererseits ist ein minimaler Abstand für eine produktive Zusammenarbeit von Mensch und Maschine notwendig. In vielen Applikationen reichen die Sicherheitsfunktionen der Maschine, beispielsweise eines Roboters, eines fahrerlosen Transportsystems (FTS) oder einer computergesteuerten Fertigungsmaschine, wie z.B. eine Geschwindigkeits-, Kraft- oder Leistungsbegrenzung, nicht für eine hinreichende Minimierung des Risikos aus. Hier bedarf es Maßnahmen, die auf einer sicherheitsgerichteten Auswertung von Messdaten eines Sensors (z.B. Lidar, Radar, Kamera, Bewegungssensor) basieren. In der Regel erfolgt diese Auswertung direkt auf einer sicheren Recheneinheit des Sensors. Die sichere Recheneinheit des Sensors sendet Signale zum Stoppen und Verlangsamen an die Maschinensteuerung, welche das Ausführen einer Sicherheitsfunktion initiiert.

In der Regel ist jedoch die Rechenleistung der sicheren Recheneinheit des Sensors limitiert, wodurch die Möglichkeiten einer dynamischen,
sicherheitsgerichteten Auswertung der Messdaten sowie die Übertragung der dynamischen Ergebnisse an die Maschinensteuerung begrenzt ist.

Aus der DE 10 2022 100797 A1 ist ein System bekannt, bei welchem sichere und nicht-sichere Logikeinheiten in Rechenknoten in verschiedenen Containern ausgeführt werden.

Die EP 3 709 106 A1 betrifft ein System, bei welchem eine sichere Steuerung ein Auswertungsergebnis einer nicht-sicheren Steuerung überprüft.

Die EP 3 644 145 A1 offenbart ein System, bei welchem sichere I/O-Module sichere Steuerungsdaten und nicht-sichere I/O-Module nicht sichere Steuerungsdaten erhalten.

Es ist eine der Erfindung zugrundeliegende Aufgabe, ein verbessertes Sicherheitssystem für eine Maschine sowie ein entsprechendes Verfahren bereitzustellen, welches in der Lage ist, komplexe Sicherheitsfunktionen basierend auf Sensordaten eines Sensors durchzuführen, während gleichzeitig ein erforderliches Sicherheitsniveau aufrechterhalten wird.

Diese Aufgabe wird durch die Gegenstände der unabhängigen Ansprüche gelöst. Die Erfindung betrifft ein Sicherheitssystem für eine Maschine, umfassend:
zumindest einen Sensor, welcher Sensordaten erzeugt;
ein nicht-sicheres Rechenmodul, das dazu ausgebildet ist, zumindest eine Sicherheitsfunktion basierend auf den Sensordaten durchzuführen und zumindest eine auf die Sicherheitsfunktion gerichtete Selbstdiagnosefunktion durchzuführen; und
ein sicheres Diagnosemodul, das dazu ausgebildet ist, mittels eines auf dem sicheren Diagnosemodul implementierten Supervisors die zumindest eine Selbstdiagnosefunktion zu überprüfen.

Um die Zuverlässigkeit und ordnungsgemäße Funktionsweise der Sicherheitsfunktionen zu gewährleisten, werden die Sicherheitsfunktionen durch die Selbstdiagnosefunktionen überwacht. Typischerweise werden diese Selbstdiagnosefunktionen auf sicheren Rechenmodulen implementiert, um bestehende Sicherheitsstandards zu erfüllen.

Die Erfindung beruht hingegen auf der Idee, die Selbstdiagnosefunktionen auf dem nicht-sicheren Rechenmodul durchzuführen und mittels des sicheren Diagnosemoduls bzw. mittels eines aus dem sicheren Diagnosemodul implementierten Supervisors die Selbstdiagnosefunktionen zu überprüfen, um hierdurch, insbesondere rechenintensive, Selbstdiagnosefunktionen durchführen zu können, während gleichzeitig die erforderlichen Sicherheitsstandards eingehalten werden. Beispielshaft für einen solchen Sicherheitsstandard kann die Sicherheitsnorm ISO 13849-1 genannt werden. Das sichere Diagnosemodul kann insbesondere Fehler bei der Ausführung der Sicherheitsfunktionen und/oder der Selbstdiagnosefunktionen ermitteln, um ein entsprechendes Sicherheits- bzw. Fehlersignal zu erzeugen.

Als sichere Rechenmodule werden Rechenmodule bezeichnet, welche speziell in Sicherheitsanwendungen eingesetzt werden. Ein sicheres Rechenmodul umfasst beispielsweise einen sicherheitsgerichteten Controller, der als spezieller Typ von Controller in der Automatisierungs- und/oder Steuerungstechnik zur Überwachung und Steuerung von sicherheitsrelevanten Prozessen und Anlagen eingesetzt wird. Der Zweck eines sicheren Rechenmoduls besteht beispielsweise darin, sicherzustellen, dass Maschinen in Anlagen sicher betrieben werden. Das sichere Rechenmodul erfüllt beispielsweise spezifische Sicherheitsvorgaben oder -standards, insbesondere hinsichtlich Rechenzeit und Fehlertoleranz. Insbesondere kann das sichere Rechenmodul echtzeitfähig ausgebildet sein und/oder echtzeitfähige Algorithmen verwenden. Das sichere Rechenmodul prüft beispielsweise eine Reihe von Eingängen, die den Zustand der gesteuerten Prozesse reflektieren und erzeugt eine Reihe von Sicherheitsausgängen, welche direkten Einfluss auf den Betrieb der zu steuernden Maschine nehmen. Das sichere Rechenmodul kann beispielsweise internationale Normen wie beispielsweise IEC 61508 oder ISO 13849-1 erfüllen, welche Anforderung für die Sicherheit von Maschinen und Anlagen bzw. für sicherheitsgerichtete Steuerungssysteme festlegen.

Ein nicht-sicheres Rechenmodul ist dagegen beispielsweise ein Rechenmodul, das nicht für die Integration in Sicherheitssysteme (z.B. gemäß einer Sicherheitsnorm) konzipiert wurde. Beispielsweise kann es sich bei einem nicht-sicheren Rechenmodul um eine handelsübliche Multikern-CPU handeln, welche nicht-echtzeitfähig ausgebildet ist und/oder nicht-echtzeitfähige Algorithmen verwendet.

Der Begriff Rechenmodul kann sich auf einen Mikroprozessor, einen Mikrocontroller, ein peripheres integriertes Schaltungselement, einen CSIC (kundenspezifischer integrierter Schaltkreis), einen ASIC (anwendungsspezifischer integrierter Schaltkreis), eine Logikschaltung, einen digitalen Signalprozessor, eine programmierbare Logikvorrichtung wie beispielsweise einen FPGA (feldprogrammierbares Gate-Array), PLD (programmierbare Logikvorrichtung), PLA (programmierbares logisches Array), einen RFID-Prozessor, eine Grafikverarbeitungseinheit (GPU), einen Smartchip, eine andere geeignete Vorrichtung oder auf eine Kombination davon beziehen.

Durch die Verwendung eines nicht-sicheren Rechenmoduls für die Berechnung der Sicherheitsfunktionen und Selbstdiagnosefunktionen können somit herkömmliche Mikroprozessoren eingesetzt werden, welche in der Regel eine höhere Rechenleistung als sicherheitsgerichtete Mikroprozessoren aufweisen. Dadurch ist es möglich, komplexe Sicherheitsfunktionen wie eine dynamische Evaluation eines maximalen, von der Maschine einzuhaltenden Bremsweges auf der Basis von ermittelten Abständen zwischen Maschinenposition und messtechnisch erkannten Objekten, eine dynamische Auswertung von dreidimensionalen Messdaten, um vorstehend erwähnte Abstände sicherheitsgerichtet zu ermitteln und/oder eine Objektklassifizierung auf Grundlage von Messdaten, um z.B. auf Menschen und andere Maschinen unterschiedlich reagieren zu können, durchzuführen.

Das Sicherheitssystem kann insbesondere mit einer Maschinensteuerung gekoppelt oder koppelbar sein, wobei die Maschinensteuerung basierend auf den Sensordaten des Sensors die Maschine und insbesondere die Bewegung der Maschine steuert. Wenn das Sicherheitssystem und insbesondere das sichere Diagnosemodul beispielsweise einen Fehler beim Ausführen der Sicherheitsfunktionen und/oder der Selbstdiagnosefunktionen ermittelt, kann das Sicherheitssystem ein Fehlersignal bzw. ein Sicherheitssignal an die Maschinensteuerung senden, um eine sicherheitsgerichtete Aktion der Maschine, beispielsweise ein Stoppen der Maschine, einzuleiten. Bei der Maschine kann es sich insbesondere um eine automatisierte Maschine im Industrieumfeld handeln, beispielsweise um einen Roboter, insbesondere einen Industrieroboter nach VDI-Richtlinie 2860, ein fahrerloses Transportsystem (FTS) oder eine computergesteuerte Fertigungsmaschine.

Ferner können die auf dem nicht-sicheren Rechenmodul bereits implementierten Selbstdiagnosefunktionen auch teilweise auf dem sicheren Rechenmodul, insbesondere durch den Supervisor, implementiert sein. Die Überwachung der Selbstdiagnosefunktionen durch den Supervisor, wird in diesem Fall durch eine redundante Implementierung sowohl auf dem nicht-sicheren Rechenmodul als auch dem sicheren Rechenmodul umgesetzt, sodass die Zuverlässigkeit der berechneten Ergebnisse der Selbstdiagnosefunktionen und somit die Sicherheit des Systems erhöht wird.

Weitere Ausführungsformen der Erfindung sind der Beschreibung, den Unteransprüchen sowie den Zeichnungen zu entnehmen.

Gemäß einer ersten Ausführungsform ist das nicht-sichere Rechenmodul kein Teil einer Maschinensteuerung. Beispielsweise ist das nicht-sichere Rechenmodul als eigenständiges Rechenmodul ausgebildet, das mit der Maschinensteuerung, insbesondere elektrisch, in Verbindung steht. Insbesondere handelt es sich bei dem nicht-sicheren Rechenmodul und der Maschinensteuerung um zwei physisch getrennte Einheiten, welche beispielsweise koppelbar sind. Über die Verbindung mit der Maschinensteuerung kann ein Datenaustausch zwischen der Maschinensteuerung und dem nicht-sicheren Rechenmodul erfolgen. Beispielsweise stellt die Maschinensteuerung dem nicht-sicheren Rechenmodul für die Ausführung der Sicherheitsfunktionen relevante Informationen, insbesondere in Echtzeit, zu Verfügung.

Gemäß einer weiteren Ausführungsform ist der auf diesem sicheren Diagnosemodul implementierte Supervisor kein Teil der Maschinensteuerung. Das sichere Diagnosemodul ist beispielsweise als eigenständiges Rechenmodul ausgebildet, welches von der Maschinensteuerung physisch getrennt ist. Auch das sichere Diagnosemodul ist mit der Maschinensteuerung koppelbar. Die vorstehenden Ausführungen zum Datenaustausch gelten hierbei entsprechend.

Durch die Nutzung externer Rechenmodule, welche nicht als Teil der Maschinensteuerung ausgebildet sind, können zum einen die Rechenanforderungen an die Maschinensteuerung reduziert werden. Zum anderen sind bestehende Maschinensteuerungssysteme durch die externen Rechenmodule leicht auf einfache Weise nachrüstbar, so dass eine erhöhte Flexibilität erreicht wird. Beispielsweise können bestehende Systeme je nach Komplexität und Anforderung individuell mit entsprechenden externen Rechenmodulen nachgerüstet werden, um ein gewünschtes Sicherheitsniveau zu erreichen. Ferner kann auch auf eine komplette Integration der Sicherheitsfunktionen in die bestehende Maschinensteuerung, welche kompliziert und kostenintensiv ist, verzichtet werden.

Gemäß einer weiteren Ausführungsform umfassen die Selbstdiagnosefunktionen eine Programm-Sequenz-Überwachungsfunktion, die ausgebildet ist, zumindest einen Teil eines computerausführbaren Programms auf seinen logischen Ablauf und seine erwartete Durchlaufzeit hin zu überprüfen. Insbesondere wird das Programm in seine logischen Einzelabläufe unterteilt, deren erfolgreicher Durchlauf durch eine vordefinierte Aktualisierung eines Hashs bestätigt werden kann. Insbesondere wird der Hashwert an den Supervisor übermittelt, wobei der Supervisor nach einem jeweiligen Durchlauf des Programms den übermittelten Hashwert mit einem hinterlegten erwarteten Hashwert abgleicht und prüft, ob die Durchlaufzeit des Programms eine hinterlegte Durchlaufzeit überschreitet. Der erwartete Hashwert und/oder die hinterlegte Durchlaufzeit werden beispielsweise bei einer erstmaligen Registrierung der Sicherheitsfunktion beim Supervisor übermittelt und hinterlegt. Die Registrierung der Sicherheitsfunktion beim Supervisor kann umfassen, dass dem Supervisor eine jeweilige Sicherheitsfunktion angezeigt wird, sodass dieser darüber informiert ist, welche von dem nicht-sicheren Rechenmodul durchgeführten Sicherheitsfunktionen von dem Supervisor zu überprüfen sind.

Basierend auf einer vorgegebenen Bedingung kann der Supervisor anschließend ein Sicherheitssignal erzeugen und an die Maschinensteuerung weiterleiten, um eine Aktion, beispielsweise das Stoppen der Maschine, einzuleiten. Beispielsweise ist die Bedingung, dass der Hashwert und der hinterlegte erwartete Hashwert und/oder die Durchlaufzeit und/oder die hinterlegte Durchlaufzeit voneinander abweichen. Die Bedingung kann ferner lauten, dass die Differenz zwischen dem Hashwert und dem hinterlegten erwarteten Hashwert und/oder zwischen der Durchlaufzeit und der hinterlegten Durchlaufzeit größer als ein vorgegebener Schwellenwert ist. Insbesondere stellt die hinterlegte Durchlaufzeit einen Maximalwert dar. Entsprechend kann ein Fehler angezeigt werden, wenn die Durchlaufzeit die hinterlegte Durchlaufzeit überschreitet.

Gemäß einer weiteren Ausführungsform umfassen die Selbstdiagnosefunktionen eine Speicher-Überprüfungsfunktion, die ausgebildet ist, in einem Systemspeicher abgespeicherten Programmcode auf Fehler zu überprüfen. Insbesondere werden Abhängigkeiten im Programmcode auf mögliche Veränderungen oder Fehler überprüft. Beim Ausführen der Sicherheitsfunktionen wird beispielsweise eine Checksumme über den Programmcode und seine Abhängigkeiten generiert und als Checksummen-Erwartungswert abgelegt. Zum Startzeitpunkt des Programms und/oder kontinuierlich während des Programmdurchlaufs wird beispielsweise eine dynamische über die entsprechenden Speicherbereiche generierte Checksumme mit dem Checksummen-Erwartungswert abgeglichen und somit validiert. **In** einer Ausführungsform ist die Speicher-Überprüfungsfunktion direkt mit dem Supervisor verbunden, d.h. eine neu ermittelte Checksumme wird direkt an den Supervisor übermittelt, der die Checksumme mit dem vorab gespeicherten Checksummen-Erwartungswert abgleicht. Ferner kann auch eine Zeitdauer hinterlegt sein, innerhalb derer der Supervisor eine Rückmeldung von dem nicht-sicheren Rechenmodul erwartet. Beispielsweise kann der Supervisor basierend auf einem Vergleich der Checksumme mit dem Checksummen-Erwartungswert und/oder basierend auf einem Vergleich der Zeitdauer der Rückmeldung mit der hinterlegten Zeitdauer eine Aktion, beispielsweise ein Stoppen, der Maschine einleiten. Beispielsweise kann der Supervisor eine Aktion der Maschine einleiten, wenn er feststellt, dass die Checksumme und der Checksummen-Erwartungswert und/oder die Zeitdauer der Rückmeldung und die hinterlegte Zeitdauer voneinander abweichen. Alternativ kann der Supervisor eine Aktion einleiten, wenn er feststellt, dass die Differenz zwischen der Checksumme und dem Checksummen-Erwartungswert und/oder der Zeitdauer der Rückmeldung und der hinterlegten Zeitdauer einen vorgegebenen Schwellenwert überschreitet.

In einer Ausführungsform werden zumindest zwei Erwartungswerte, z.B. Checksummen-Erwartungswerte, beim Supervisor hinterlegt, wobei die zwei Erwartungswerte, insbesondere im Rahmen der Überwachung der Selbstdiagnosefunktionen, alternierend vom Supervisor zur Überprüfung der empfangenen Werte, z.B. der Checksummen, verwendet werden können. Somit kann einer im Falle eines Fehlers auftretenden Blockierung vorgebeugt werden.

Gemäß einer weiteren Ausführungsform umfassen die Selbstdiagnosefunktionen eine Variablen-Daten-Integritätsfunktion, die ausgebildet ist, variable Teile des Programms auf Fehler zu überprüfen. Insbesondere werden dynamische Informationen wie beispielsweise Variablen und/oder Konfigurationsparameter in den sicherheitsrelevanten Teilen der implementierten Anwendung auf unerwartete Veränderungen hin überprüft. Zusätzlich oder alternativ können Konfigurationsdateien mit Checksummen verwendet werden, um eine Veränderung der Variablen und/oder der Konfigurationsparameter festzustellen. Beispielsweise werden die in den Konfigurationsdateien abgelegten Werte für jeweilige Konfigurationsparameter mit den aktuellen Werten der Konfigurationsparameter verglichen, um unerwartete Veränderungen und/oder Fehler festzustellen. Die Variablen und/oder Konfigurationsparameter können aber auch hinsichtlich unlogischer Werte und/oder ungewöhnlicher Veränderungen überprüft werden. Beispielsweise kann eine Variable einen für die Variable spezifischen Wertebereich aufweisen, wobei ein Fehler vorliegt, wenn der aktuelle Wert der Variable außerhalb dieses Wertebereichs liegt. Ferner kann eine ungewöhnliche Veränderung vorliegen, wenn die Änderung des Wertes einer Variable von einem Zeitpunkt t₀ zu einem Zeitpunkt t₁, d.h. die Differenz zwischen dem Wert der Variable zum Zeitpunkt t₁ und dem Wert der Variable zum Zeitpunkt t₀, größer als ein vorgegebener Schwellenwert ist.

Gemäß einer weiteren Ausführungsform umfassen die Selbstdiagnosefunktionen eine Messdaten-Überprüfungsfunktion, die ausgebildet ist, die Sensordaten oder die Übermittlung der Sensordaten auf Fehler zu überprüfen. Insbesondere wird die Plausibilität der Sensordaten, beispielsweise von ermittelten Abstandswerten, überprüft und/oder potentielle Fehler bei der Übermittlung der Sensordaten an das sichere Diagnosemodul überprüft. Ein Fehler kann beispielsweise vorliegen, wenn der Sensor Sensordaten erzeugt, welche außerhalb eines Messbereichs des Sensors liegen. Beispielsweise handelt es sich bei dem Sensor um einen Distanzmesssensor, welcher Distanzen im Bereich von 0m - 10m messen kann. Distanzmesswerte, welche über diesem Distanzmessbereich liegen, würden in diesem Fall als unplausible Messdaten identifiziert und ein entsprechendes Fehlersignal erzeugen.

Bei einigen Ausführungsformen sind die Programm-Sequenz-Überwachungsfunktion, die Speicher-Überprüfungsfunktion, die Variablen-Daten-Integritätsfunktion und Messdaten-Überprüfungsfunktion als Selbstdiagnosefunktionen implementiert, wobei ferner, insbesondere nur, die Programm-Sequenz-Überwachungsfunktion und/oder die Speicher-Überprüfungsfunktion vom Supervisor ausgeführt werden. Durch das Überprüfen einer vorgegebenen Auswahl an Selbstdiagnosefunktionen können beispielsweise andere, sich von dieser Auswahl unterscheidende Selbstdiagnosefunktionen indirekt überprüft werden. Eine derartige Implementierung führt beispielsweise zu einem Sicherheitssystem gemäß ISO 13849-1.

Gemäß einer weiteren Ausführungsform umfasst der Sensor einen der folgenden Sensoren: einen Laserdistanzmesssensor, insbesondere einen LIDAR-Sensor oder einen FMCW-LIDAR-Sensor, einen Radarsensor oder eine 2D- oder 3D-Kamera oder einen Bewegungssensor (Inertial Measurement Unit, IMU). Grundsätzlich kann der Sensor aber jeden geeigneten Sensor umfassen.

Gemäß einer weiteren Ausführungsform ist das nicht-sichere Rechenmodul zumindest teilweise in einem nicht-sicheren Teil der Maschinensteuerung integriert. Dies kann beispielsweise vorteilhaft sein, wenn im nicht-sicheren Teil der Maschinensteuerung große Rechenkapazitäten zur Verfügung stehen. In diesem Fall kann auf zusätzliche Hardware verzichtet werden, wodurch Platz und Kosten gespart werden.

Gemäß einer weiteren Ausführungsform ist das sichere Diagnosemodul zumindest teilweise in einen sicheren Teil der Maschinensteuerung integriert. Wie bereits vorstehend beschrieben, kann in diesem Fall die bestehende Architektur der Maschinensteuerung ausgenutzt werden, um das sichere Diagnosemodul zu implementieren. Ferner kann auch in diesem Fall auf zusätzliche Hardware verzichtet werden, wodurch Platz und Kosten gespart werden.

Gemäß einer weiteren Ausführungsform ist der Supervisor ferner zumindest teilweise auf einer nicht-sicheren Hardware implementiert. Der auf der nicht-sicheren Hardware implementierte Teil des Supervisors kann beispielsweise unter Ausnutzung der rechenstarken, nicht-sicheren Hardware rechenintensive Funktionen bzw. Aufgaben ausführen, während der auf dem sicheren Diagnosemodul implementierte Teil des Supervisors beispielsweise nur die Überprüfung der berechneten Werte und/oder das Einleiten der Maschinenaktionen ausführt.

Gemäß einer weiteren Ausführungsform sind die Selbstdiagnosefunktionen in zumindest einem Software-Container implementiert, der ausgebildet ist, die Selbstdiagnosefunktionen auf dem nicht-sicheren Rechenmodul isoliert auszuführen. Beispielsweise können die Selbstdiagnosefunktionen in Docker-Containern implementiert sein. Jede Selbstdiagnosefunktion kann beispielsweise in einem zugehörigen Docker-Container implementiert sein. Isoliert kann bedeuten, dass der Software-Container alle erforderlichen Komponenten enthält, um eine bestimmte Anwendung auszuführen. Ein Docker-Container ist beispielsweise ein laufendes Exemplar einer Docker-Image-Datei, die alle erforderlichen Komponenten enthält, um eine bestimmte Anwendung auszuführen. Dies kann alles von Betriebssystemkomponenten bis hin zu Bibliotheken, Frameworks und Anwendungscode umfassen. Insbesondere sind die Docker-Container isoliert, sodass sie sich nicht gegenseitig beeinflussen. Ferner sind die Docker-Container von anderen auf dem nicht-sicheren Rechenmodul ausführbaren Programmen isoliert. Dies macht sie zu einer sicheren und zuverlässigen Methode für die Ausführung der Selbstdiagnosefunktionen. Die einzelnen Docker-Container können ferner über einen externen Service wie beispielsweise Kubernetes verwaltet werden. Kubernetes vereinfacht beispielsweise die Bereitstellung und Verwaltung der Container-Anwendungen, indem es eine automatisierte Container-Orchestrierung bereitstellt. Es ermöglicht eine effiziente Verwaltung von Containern, indem es Funktionen wie Lastenausgleich, automatische Skalierung, Selbstheilung und Rollback von Updates bereitstellt.

Gemäß einer weiteren Ausführungsform weist das Sicherheitssystem eine kaskadierte Kontrollstruktur auf, wobei innerhalb einer inneren Kontrollstruktur auf dem nicht-sicheren Rechenmodul die Selbstdiagnosefunktion zumindest teilweise mittels eines internen Supervisors, welcher auf dem nicht-sicheren Rechenmodul implementiert ist, überprüft werden, wobei in einer äußeren Kontrollstruktur die Selbstdiagnosefunktionen ferner zumindest teilweise mittels des Supervisors auf dem sicheren Rechenmodul überprüft werden. Die kaskadierte Kontrollstruktur entspricht beispielsweise einer Verschachtelung von Selbstdiagnosefunktionen und/oder Überwachungsfunktionen. Insbesondere können der interne Supervisor auf dem nicht-sicheren Rechenmodul und der Supervisor auf dem sicheren Rechenmodul Daten austauschen. Beispielsweise führt der interne Supervisor auf dem nicht-sicheren Rechenmodul komplexe und rechenintensive Funktionen bzw. Berechnungen aus und übermittelt die entsprechenden berechneten Ergebnisse an den Supervisor auf dem sicheren Rechenmodul, der diese Ergebnisse weiterverarbeitet. Somit kann die Rechenleistung des nicht-sicheren Rechenmoduls genutzt werden, um rechenintensive Funktionen auszulagern, während der Supervisor auf dem sicheren Rechenmodul die berechneten Ergebnisse überprüft, um den erhöhten Sicherheitsstandard gerecht zu werden.

Ein weiterer Aspekt der Erfindung betrifft ein Verfahren zum Überwachen von Selbstdiagnosefunktionen einer Steuerung, wobei das Verfahren umfasst, dass:
Sensordaten von einem nicht-sicheren Rechenmodul empfangen werden, basierend auf den Sensordaten zumindest eine Sicherheitsfunktion durchgeführt wird und zumindest eine auf die Sicherheitsfunktion gerichtete Selbstdiagnosefunktion durchgeführt wird; und
die zumindest eine Selbstdiagnosefunktion mittels eines auf dem sicheren Diagnosemodul (10) implementierten Supervisors überprüft wird.

Für das Verfahren und das Maschinensystem gelten die Ausführungen zum Sicherheitssystem entsprechend.

Soweit nicht anders beschrieben, ist jede Kombination der vorstehenden Ausführungsformen möglich.

Nachstehend wird die Erfindung rein beispielhaft unter Bezugnahme auf die Zeichnungen dargestellt. Es zeigen:
- Fig. 1: ein Blockschaltbild eines Maschinensystems;
- Fig. 2: eine Ausführungsform eines Sicherheitssystems für eine Maschine; und
- Fig. 3: eine weitere Ausführungsform des Sicherheitssystems.

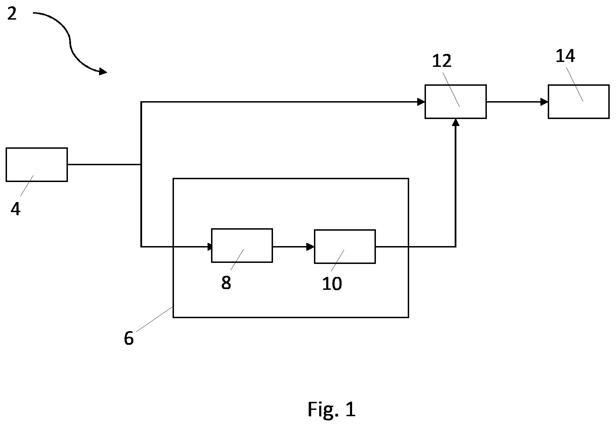

Fig. 1 zeigt ein Blockschaltbild eines Maschinensystems 2, welches einen Distanzmesssensor 4, einen Sicherheitsabschnitt 6 einschließlich eines nicht-sicheren Rechenmoduls 8 und eines sicheren Diagnosemoduls 10, eine Maschinensteuerung 12 und eine Maschine 14 umfasst.

Der Distanzmesssensor 4 ist beispielsweise an der Maschine 14 angebracht und misst eine Distanz zwischen der Maschine 14 und Objekten, beispielsweise Menschen, anderen Maschinen oder anderen geeigneten Objekten, in der Umgebung. Um die Sicherheit der Menschen in der Nähe der Maschine 14 nicht zu gefährden und um eine sichere Funktionsweise der Maschine 14 zu gewährleisten, müssen entsprechende Maßnahmen ergriffen werden, sobald beispielsweise eine Person einen Mindestabstand zur Maschine 14 unterschreitet. Hierbei werden in der Regel eine Vielzahl von Sicherheitsfunktionen, wie zum Beispiel die Berechnung eines maximalen Bremsweges der Maschine oder eines Maschinenteils, beispielsweise eines Roboterarms, ausgeführt, um ein entsprechendes Maß an Sicherheit zu gewährleisten. Einzuhaltende Sicherheitsvorgaben können beispielsweise durch Sicherheitsnormen wie die ISO 13849-1 bereitgestellt sein. Die Sicherheitsfunktionen werden basierend auf Sensordaten des Distanzmesssensors 4 auf dem nicht-sicheren Rechenmodul 8 ausgeführt. Auf dem nicht-sicheren Rechenmodul 8 werden außerdem eine Reihe von Selbstdiagnosefunktionen wie beispielsweise eine Programm-Sequenz-Überwachungsfunktion, eine Speicher-Überprüfungsfunktion, eine Variablen-Daten-Integritätsfunktion und/oder eine Messdaten-Überprüfungsfunktion ausgeführt, welche potentielle Fehler beim Ausführen der Sicherheitsfunktionen identifizieren. Das nicht-sichere Rechenmodul ist dabei ein herkömmlicher Mikroprozessor, der nicht sicherheitszertifiziert ist und keine Sicherheitsnormen für sicherheitsgerichtete Mikroprozessoren erfüllt. Hierdurch können für das nicht-sichere Rechenmodul leistungsstarke Mikroprozessoren aus der Industrie verwendet werden, so dass auch die Verwendung rechenintensiver Sicherheitsfunktionen ermöglicht wird.

Das nicht-sichere Rechenmodul 8 sendet Daten, welche aus dem Ausführen der Sicherheitsfunktionen und/oder der Selbstdiagnosefunktion resultieren, an das sichere Diagnosemodul 10, wo die Selbstdiagnosefunktionen durch einen Supervisor 16 überwacht werden. Der Supervisor 16 gleicht Ergebnisse des nicht-sicheren Rechenmoduls 8 mit vorab hinterlegten Werten ab, um einen potenziellen Fehler zu identifizieren. Zusätzlich oder alternativ kann der Supervisor 16 einen Teil der Selbstdiagnosefunktionen eigenständig durchführen, um die Ergebnisse des nicht-sicheren Rechenmoduls 8 zu prüfen. Stellt das sichere Diagnosemodul 10 einen Fehler in den Sicherheitsfunktionen und/oder den Selbstdiagnosefunktionen fest, so sendet das sichere Diagnosemodul ein Sicherheitssignal an die Maschinensteuerung 12, welche in Reaktion auf das Sicherheitssignal ein Steuersignal an die Maschine 14 sendet, um die Maschine 14 zum Stoppen zu veranlassen.

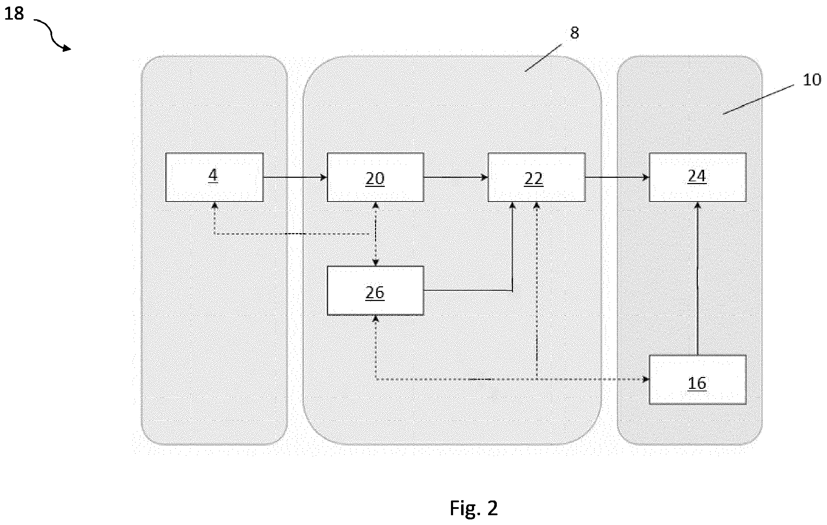

Fig. 2 veranschaulicht ein Sicherheitssystem 18, das den vorab beschriebenen Distanzmesssensor 4 und den Sicherheitsabschnitt 6 einschließlich des nicht-sicheren Rechenmoduls 8 und des sicheren Diagnosemoduls 10 umfasst. Wie in Fig. 2 erkennbar, weist das Sicherheitssystem 18 eine kaskadierte Kontrollstruktur auf. **In** dem nicht-sicheren Rechenmodul 8 werden die Sicherheitsfunktionen basierend auf den empfangenen Sensordaten des Distanzmesssensors 4 ausgeführt, wobei die Sicherheitsfunktionen 20 Sicherheitsausgabewerte 22 ergeben, die einer Sicherheitssteuerung 24 auf dem sicheren Diagnosemodul bereitgestellt werden. Die Sicherheitsfunktionen und Sicherheitsausgabewerte werden von einem internen Supervisor 26 überwacht, indem dieser eine Reihe von Selbstdiagnosefunktionen ausführt. Die Sicherheitsfunktionen 20, die Sicherheitsausgabewerte 22 und der interne Supervisor 26 bilden eine Art innere Kontrollstruktur der kaskadierten Kontrollstruktur. Darüber hinaus wird der interne Supervisor und die Selbstdiagnosefunktionen sowie die Sicherheitsausgabewerte von dem Supervisor 16 auf dem sicheren Diagnosemodul überwacht, wobei der Supervisor 16 auf dem sicheren Diagnosemodul 10 ein Sicherheitssignal an die Sicherheitssteuerung 24 sendet, falls ein Fehler in den Sicherheitsausgabewerten und/oder den Selbstdiagnosefunktionen erkannt wird. Die Sicherheitsfunktionen 20, die Sicherheitsausgabewerte 22, die Sicherheitssteuerung 24, der Supervisor 16 und der interne Supervisor 26 bilden die äußere Kontrollstruktur der kaskadierten Kontrollstruktur. Die kaskadierte Struktur des Sicherheitssystems führt zu einer doppelten Absicherung der berechneten Werte der Sicherheitsfunktionen und/oder der Selbstdiagnosefunktionen und damit zu einer erhöhten Sicherheit des Systems.

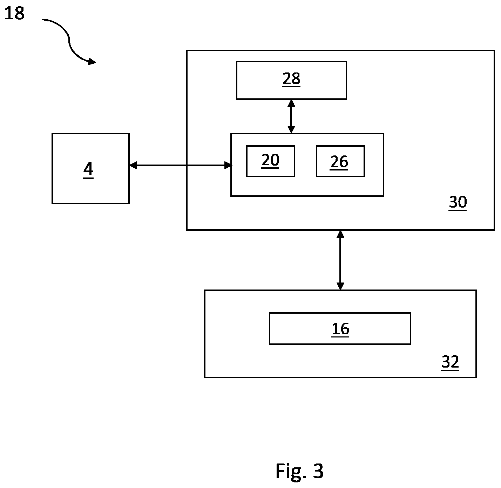

Fig. 3 veranschaulicht eine Ausführungsform des Sicherheitssystems 18, bei der das nicht-sichere Rechenmodul 8 als Teil des nicht-sicheren Teils 30 der Maschinensteuerung 12 und der Supervisor 16 bzw. das sichere Diagnosemodul 10 als Teil des sicheren Teils 32 der Maschinensteuerung 12 ausgebildet ist. Die vorstehenden Ausführungen zu Fig. 1 und Fig. 2 gelten für Fig. 3 entsprechend. Der Vorteil dieser Ausführungsform liegt darin, dass die Sicherheitsfunktionen 20 und Selbstdiagnosefunktionen, d.h. der interne Supervisor 26, sowie der Supervisor 16 direkt in die Maschinensteuerung 12 integriert sind. Dadurch ist keine zusätzliche Hardware notwendig. Ferner kann die bereits bestehende Architektur der Maschinensteuerung 12 ausgenutzt werden, wodurch der Zugriff auf die für die Sicherheitsfunktionen relevanten Signale erleichtert wird.

Wie in Fig. 3 außerdem gezeigt, umfasst das nicht-sichere Rechenmodul 8 eine Sicherheitsschnittstelle 28 zum Anschließen externer Hardware, welche beispielsweise Konfigurationsparameter für die Sicherheitsfunktionen bereitstellt. Hierdurch wird das Anpassen der Konfigurationsparameter für die Sicherheitsfunktionen erleichtert. Beispielsweise können bei einer Änderung der Sicherheitsstandards bzw. -vorgaben die entsprechenden Konfigurationsparameter auf einfache Weise angepasst bzw. geändert werden.

### Bezugszeichenliste

- 2: Maschinensystem
- 4: Distanzmesssensor
- 6: Sicherheitsabschnitt
- 8: nicht-sicheres Rechenmodul
- 10: sicheres Diagnosemodul
- 12: Maschinensteuerung
- 14: Maschine
- 16: Supervisor
- 18: Sicherheitssystem
- 20: Sicherheitsfunktionen
- 22: Sicherheitsausgabewert
- 24: Sicherheitssteuerung
- 26: interner Supervisor
- 28: Sicherheitsschnittstelle
- 30: nicht-sicherer Teil der Maschinensteuerung
- 32: sicherer Teil der Maschinensteuerung

## Patentansprüche

1. Sicherheitssystem (18) für eine Maschine (14), umfassend:
zumindest einen Sensor, welcher Sensordaten erzeugt;
ein nicht-sicheres Rechenmodul (8), das dazu ausgebildet ist, zumindest eine Sicherheitsfunktion basierend auf den Sensordaten durchzuführen und zumindest eine auf die Sicherheitsfunktion (20) gerichtete Selbstdiagnosefunktion durchzuführen; und
ein sicheres Diagnosemodul (10), das dazu ausgebildet ist, mittels eines auf dem sicheren Diagnosemodul (10) implementierten Supervisors (16) die zumindest eine Selbstdiagnosefunktion zu überprüfen.

2. Sicherheitssystem (18) nach Anspruch 1,
wobei das nicht-sichere Rechenmodul (8) kein Teil einer Maschinensteuerung (12) ist.

3. Sicherheitssystem (18) nach einem der vorstehenden Ansprüche,
wobei der auf dem sicheren Diagnosemodul (10) implementierte Supervisor (16) kein Teil der Maschinensteuerung (12) ist.

4. Sicherheitssystem (18) nach einem der vorstehenden Ansprüche,
wobei die zumindest eine Selbstdiagnosefunktion eine Programm-Sequenz-Überwachungsfunktion umfassen, die ausgebildet ist, zumindest einen Teil eines computerausführbaren Programms auf seinen logischen Ablauf und seine erwartete Durchlaufzeit hin zu überprüfen.

5. Sicherheitssystem (18) nach einem der vorstehenden Ansprüche,
wobei die zumindest eine Selbstdiagnosefunktion eine Speicher-Überprüfungsfunktion umfassen, die ausgebildet ist, in einem Systemspeicher abgespeicherten Programmcode auf Fehler zu überprüfen.

6. Sicherheitssystem (18) nach einem der vorstehenden Ansprüche,
wobei die zumindest eine Selbstdiagnosefunktion eine Variablen-Daten-Integritätsfunktion umfassen, die ausgebildet ist, variable Teile des Programms auf Fehler zu überprüfen.

7. Sicherheitssystem (18) nach einem der vorstehenden Ansprüche,
wobei die zumindest eine Selbstdiagnosefunktion eine Messdaten-Überprüfungsfunktion umfassen, die ausgebildet ist, die Sensordaten oder die Übermittlung der Sensordaten auf Fehler zu überprüfen.

8. Sicherheitssystem (18) nach einem der vorstehenden Ansprüche,
wobei der Sensor zumindest einen der folgenden Sensoren umfasst:
einen Laserdistanzmesssensor, einen Radarsensor oder eine 2D- oder 3D-Kamera.

9. Sicherheitssystem (18) nach einem der Ansprüche 4 bis 8,
wobei das nicht-sichere Rechenmodul (8) zumindest teilweise in einen nicht-sicheren Teil (30) einer Maschinensteuerung (12) integriert ist.

10. Sicherheitssystem (18) nach einem der Ansprüche 4 bis 9,
wobei das sichere Diagnosemodul (10) zumindest teilweise in einen sicheren Teil (32) der Maschinensteuerung (12) integriert ist.

11. Sicherheitssystem (18) nach einem der vorstehenden Ansprüche,
wobei die zumindest eine Selbstdiagnosefunktion in zumindest einem Software-Container implementiert ist, der ausgebildet ist, die zumindest eine Selbstdiagnosefunktion auf dem nicht-sicheren Rechenmodul isoliert auszuführen.

12. Sicherheitssystem (18) nach einem der vorstehenden Ansprüche, wobei das Sicherheitssystem (18) eine kaskadierte Kontrollstruktur aufweist, wobei innerhalb einer inneren Kontrollstruktur auf dem nicht-sicheren Rechenmodul die zumindest eine Selbstdiagnosefunktion zumindest teilweise mittels eines internen Supervisors (26), welcher auf dem nicht-sicheren Rechenmodul (8) implementiert ist, überprüft wird, wobei in einer äußeren Kontrollstruktur die zumindest eine Selbstdiagnosefunktion ferner zumindest teilweise mittels des Supervisors (16) auf dem sicheren Diagnosemodul (10) überprüft wird.

13. Verfahren zum Überwachen von Selbstdiagnosefunktionen einer Steuerung, wobei das Verfahren umfasst, dass:
Sensordaten von einem nicht-sicheren Rechenmodul (8) empfangen werden,
das nicht-sichere Rechenmodul (8) basierend auf den Sensordaten zumindest eine Sicherheitsfunktion durchführt und zumindest eine auf die Sicherheitsfunktion (20) gerichtete Selbstdiagnosefunktion durchführt; und
ein sicheres Diagnosemodul (10) die zumindest eine Selbstdiagnosefunktion mittels eines auf dem sicheren Diagnosemodul (10) implementierten Supervisors (16) überprüft.

## Claims

1. A safety system (18) for a machine (14), said safety system (18) comprising:
at least one sensor which generates sensor data;
a non-safe computing module (8) which is configured to perform at least one safety function based on the sensor data and to perform at least one self-diagnosis function directed to the safety function (20); and
a safe diagnostic module (10) which is configured to check the at least one self-diagnosis function by means of a supervisor (16) implemented on the safe diagnostic module (10).

2. A safety system (18) according to claim 1,
wherein the non-safe computing module (8) is not part of a machine control (12).

3. A safety system (18) according to one of the preceding claims,
wherein the supervisor (16) implemented on the safe diagnostic module (10) is not part of the machine control (12).

4. A safety system (18) according to any one of the preceding claims,
wherein the at least one self-diagnosis function comprises a program sequence monitoring function which is configured to check at least a part of a computer-executable program for its logical sequence and its expected run-through time.

5. A safety system (18) according to any one of the preceding claims,
wherein the at least one self-diagnosis function comprises a memory check function which is configured to check program code stored in a system memory for errors.

6. A safety system (18) according to any one of the preceding claims, wherein the at least one self-diagnosis function comprises a variable data integrity function which is configured to check variable parts of the program for errors.

7. A safety system (18) according to any one of the preceding claims, wherein the at least one self-diagnosis function comprises a measurement data check function which is configured to check the sensor data or the transmission of the sensor data for errors.

8. A safety system (18) according to any one of the preceding claims, wherein the sensor comprises at least one of the following sensors:
a laser distance measurement sensor, a radar sensor or a 2D camera or 3D camera.

9. A safety system (18) according to any one of the claims 4 to 8,
wherein the non-safe computing module (8) is at least partly integrated into a non-safe part (30) of a machine control (12).

10. A safety system (18) according to any one of the claims 4 to 9,
wherein the safe diagnostic module (10) is at least partly integrated into a safe part (32) of the machine control (12).

11. A safety system (18) according to any one of the preceding claims, wherein the at least one self-diagnosis function is implemented in at least one software container which is configured to execute the at least one self-diagnosis function in isolation on the non-safe computing module.

12. A safety system (18) according to any one of the preceding claims,
wherein the safety system (18) has a cascaded control structure, wherein, within an inner control structure on the non-safe computing module, the at least one self-diagnosis function is at least partly checked by means of an internal supervisor (26) which is implemented on the non-safe computing module (8), wherein, in an outer control structure, the at least one self-diagnosis function is further at least partly checked by means of the supervisor (16) on the safe diagnostic module (10).

13. A method of monitoring self-diagnosis functions of a control, wherein the method comprises that:
sensor data are received from a non-safe computing module (8),
the non-safe computing module (8) performs at least one safety function based on the sensor data and performs at least one self-diagnosis function directed to the safety function (20); and
a safe diagnostic module (10) checks the at least one self-diagnosis function by means of a supervisor (16) implemented on the safe diagnostic module (11).

## Revendications

1. Système de sécurité (18) pour une machine (14), comprenant :
au moins un capteur qui génère des données de capteur ;
un module de calcul non sécurisé (8) configuré pour exécuter au moins une fonction de sécurité basée sur les données de capteur et pour exécuter au moins une fonction d'autodiagnostic orientée vers la fonction de sécurité (20) ; et
un module de diagnostic sécurisé (10) configuré pour vérifier ladite au moins une fonction d'autodiagnostic au moyen d'un superviseur (16) mis en œuvre sur le module de diagnostic sécurisé (10).

2. Système de sécurité (18) selon la revendication 1,
dans lequel le module de calcul non sécurisé (8) ne fait pas partie d'une commande de machine (12).

3. Système de sécurité (18) selon l'une des revendications précédentes, dans lequel le superviseur (16) mis en œuvre sur le module de diagnostic sécurisé (10) ne fait pas partie de la commande de machine (12).

4. Système de sécurité (18) selon l'une des revendications précédentes, dans lequel ladite au moins une fonction d'autodiagnostic comprend une fonction de surveillance de séquence de programme configurée pour vérifier au moins une partie d'un programme exécutable par ordinateur quant à son déroulement logique et au temps d'exécution prévu.

5. Système de sécurité (18) selon l'une des revendications précédentes, dans lequel ladite au moins une fonction d'autodiagnostic comprend une fonction de vérification de mémoire configurée pour vérifier un code de programme, stocké dans une mémoire de système, quant à des erreurs.

6. Système de sécurité (18) selon l'une des revendications précédentes, dans lequel ladite au moins une fonction d'autodiagnostic comprend une fonction d'intégrité des données variables configurée pour vérifier des parties variables du programme quant à des erreurs.

7. Système de sécurité (18) selon l'une des revendications précédentes, dans lequel ladite au moins une fonction d'autodiagnostic comprend une fonction de vérification des données de mesure configurée pour vérifier les données de capteur ou la transmission des données de capteur quant à des erreurs.

8. Système de sécurité (18) selon l'une des revendications précédentes, dans lequel le capteur comprend au moins l'un des capteurs suivants : un capteur de mesure de distance laser, un capteur radar ou une caméra 2D ou 3D.

9. Système de sécurité (18) selon l'une des revendications 4 à 8,
dans lequel le module de calcul non sécurisé (8) est au moins partiellement intégré dans une partie non sécurisée (30) de la commande de machine (12).

10. Système de sécurité (18) selon l'une des revendications 4 à 9,
dans lequel le module de diagnostic sécurisé (10) est au moins partiellement intégré dans une partie sécurisée (32) de la commande de machine (12).

11. Système de sécurité (18) selon l'une des revendications précédentes, dans lequel ladite au moins une fonction d'autodiagnostic est mise en œuvre dans au moins un conteneur logiciel configuré pour exécuter ladite au moins une fonction d'autodiagnostic de manière isolée sur le module de calcul non sécurisé.

12. Système de sécurité (18) selon l'une des revendications précédentes, dans lequel le système de sécurité (18) comprend une structure de contrôle en cascade, sachant que, à l'intérieur d'une structure de contrôle interne sur le module de calcul non sécurisé, ladite au moins une fonction d'auto-diagnostic est au moins partiellement vérifiée au moyen d'un superviseur interne (26) mis en œuvre sur le module de calcul non sécurisé (8), et que, dans une structure de contrôle externe, ladite au moins une fonction d'auto-diagnostic est en outre au moins partiellement vérifiée au moyen du superviseur (16) sur le module de diagnostic sécurisé (10).

13. Procédé de surveillance de fonctions d'autodiagnostic d'une commande, le procédé consistant à :
recevoir des données de capteur par un module de calcul non sécurisé (8), exécuter, sur la base des données de capteur, par le module de calcul non sécurisé (8), au moins une fonction de sécurité et au moins une fonction d'autodiagnostic orientée vers la fonction de sécurité (20) ; et
vérifier, par un module de diagnostic sécurisé (10), ladite au moins une fonction d'autodiagnostic au moyen d'un superviseur (16) mis en œuvre sur le module de diagnostic sécurisé (10).
